# FASCICULE DE BREVET EUROPEEN

(11) **EP 3 498 766 B1**
(45) Date de publication et mention de la délivrance du brevet: **23.03.2022**
(21) Numéro de dépôt: 18211659.0
(22) Date de dépôt: 11.12.2018
(51) Int. Cl.: C08J 9/32, C08L 53/02

(54) **COMPOSITION THERMOPLASTIQUE ÉLASTOMÉRIQUE DE PRÉ-EXPANSION COMPRENANT UN ÉLASTOMÈRE ET UN AGENT D'EXPANSION PHYSIQUE**
THERMOPLASTISCHE ELASTOMERZUSAMMENSETZUNG FÜR DIE VOREXPANSION, DIE EIN ELASTOMER UND EIN PHYSIKALISCHES TREIBMITTEL UMFASST
THERMOPLASTIC ELASTOMER COMPOSITION FOR PRE-EXPANSION COMPRISING AN ELASTOMER AND A PHYSICAL EXPANSION AGENT

(30) Priorité: 12.12.2017 FR 1762001
(43) Date de publication de la demande: 19.06.2019
(73) Titulaire: MCPP Innovation LLC, Tokyo 100-8251 (JP)
(72) Inventeur: BARDIN, Jérémy, 85130 TIFFAUGES (FR); AURIANT, Christophe, 85130 TIFFAUGES (FR)
(74) Mandataire: Casalonga

(56) Documents cités:
- EP-A1- 1 149 628
- WO-A2-2006/079458
- CN-A- 106 589 763
- JP-A- 2002 254 541
- JP-A- 2017 043 861
- US-A1- 2011 120 615
- US-A1- 2016 340 488

## Description

La présente invention a pour objet une composition thermoplastique élastomérique de pré-expansion, non réticulée, comprenant au moins 10 % en poids d'un ou plusieurs élastomères multiblocs comportant au moins un bloc mou et au moins un bloc dur, et des particules polymériques expansibles à la chaleur.

L'invention a également pour objet un procédé de préparation de la composition élastomérique expansée selon l'invention.

L'invention a aussi pour objet une composition thermoplastique élastomérique expansée non réticulée susceptible d'être obtenue par le procédé selon l'invention.

Enfin, l'invention a aussi pour objet une lèvre d'étanchéité utilisable dans divers domaines nécessitant des propriétés d'étanchéité.

Dans le domaine de l'automobile, la tendance générale est à l'allégement des véhicules afin de diminuer la consommation en carburant des véhicules mais également à la réduction du coût unitaire des véhicules en diminuant la quantité de matériaux nécessaire à leur fabrication.

Les pièces plastiques d'un véhicule, en particulier les joints d'étanchéité, n'échappent pas à cette tendance.

Cette tendance à l'allégement des pièces plastiques est également vraie dans les domaines du bâtiment, de l'électroménager ou encore du packaging.

La technique principale pour réduire la densité d'un matériau plastique tout en maintenant ses dimensions intactes consiste à expanser ledit matériau.

Pour ce faire, l'homme de l'art dispose principalement de deux techniques : l'injection de gaz directement dans la ligne d'extrusion/injection du matériau et l'utilisation d'agents d'expansion chimiques ou physiques, sous forme de masterbatch, c'est-à-dire en ajout séparé de la composition principale.

La première technique (injection de gaz) présente de nombreux inconvénients : elle nécessite un équipement coûteux et une grande expertise dans la mise en œuvre.

La deuxième technique n'est, elle non plus, aucunement parfaite dans le sens où elle nécessite un deuxième doseur, ce qui est un équipement plutôt rare chez les équipementiers. En outre, le fait de devoir gérer un dosage précis du masterbatch (mélange maître) entraîne, en termes de qualité une certaine dispersité de la densité finale des pièces produites.

Plus explicitement, les agents d'expansion chimiques sont des composés chimiques qui, sous l'effet de la chaleur, se décomposent et produisent du gaz, généralement du diazote ou du dioxyde de carbone.

Les agents d'expansion physiques sont généralement constitués de particules polymériques creuses remplies d'un fluide expansible à la chaleur.

Lors de la préparation du matériau plastique qui consiste à chauffer la matrice élastomérique, les particules polymériques d'expansion physique gonflent sous l'effet de l'augmentation de la pression due à l'expansion du fluide jusqu'à atteindre une certaine taille formant ainsi la porosité de la composition élastomérique expansée.

Une application particulière des joints d'étanchéité concerne les joints d'étanchéité pour vitres, portes ou coffres et plus particulièrement la partie appelée « lèvre » d'étanchéité qui réalise le contact entre la vitre, la porte ou le coffre et le reste de la structure.

La lèvre d'étanchéité doit présenter des caractéristiques particulières. Plus précisément, elle doit présenter une déformation rémanente après compression la plus faible possible pour assurer au mieux l'étanchéité entre la vitre, la porte ou le coffre et le reste de la structure.

D'une manière classique, dans le cadre de formulations comportant des élastomères multiblocs, une manière d'obtenir des déformations rémanentes à la compression faibles est de réticuler ces élastomères (notamment par le biais de peroxydes), ce qui, malheureusement, a souvent tendance à dégrader les propriétés d'émissions par génération de composés organiques volatils (VOC).

Néanmoins, dans le cadre du développement de véhicules respectueux de l'environnement et des utilisateurs, la recherche de matériaux faiblement émetteurs en composés organiques volatils est une priorité. Ainsi, un véhicule neuf (et donc les matériaux qui le composent) doit émettre une quantité minimale de composés organiques volatils.

Ainsi, le problème technique de l'invention est de proposer un nouveau matériau thermoplastique élastomérique pré-expansé permettant d'obtenir notamment une lèvre d'étanchéité expansée présentant de bonnes propriétés élastomériques similaires voire meilleures que celles d'une lèvre d'étanchéité non-expansée, en particulier concernant la déformation rémanente après compression, présentant également de préférence un dégagement en composés organiques volatils le plus faible possible, et pouvant être mis en œuvre par des procédés standards et simples d'extrusion ou d'injection (sans injection de gaz, liquide ou autre masterbatch).

Il a maintenant été découvert un matériau thermoplastique élastomérique pré-expansé, non réticulé, comprenant au moins 10 % en poids d'un ou plusieurs élastomères multiblocs comportant au moins un bloc mou et au moins un bloc dur, et des particules polymériques expansibles à la chaleur, qui présente les caractéristiques requises.

Ainsi, un objet de la présente invention est une composition thermoplastique élastomérique de pré-expansion, non réticulée, comprenant :
- de 15 à 37 % en poids par rapport au poids total de la composition, d'un ou plusieurs élastomères multiblocs comportant au moins un bloc mou et au moins un bloc dur,
- 0.5 à 2 % en poids par rapport au poids total de la composition de particules polymériques expansibles à la chaleur encapsulant un fluide expansible à la chaleur.

La composition thermoplastique élastomérique de pré-expansion selon l'invention permet d'obtenir une composition élastomérique expansée présentant de bonnes propriétés élastomériques, en particulier une déformation rémanente à la compression similaire voire meilleure que celles d'un produit équivalent non-expansé. De plus, la composition thermoplastique élastomérique expansée présente une faible émission de composés organiques volatils. En outre, elle permet d'être mise en œuvre par des procédés standards et simples d'extrusion ou d'injection.

L'invention a également pour objet un procédé de préparation d'une composition élastomérique expansée comprenant les étapes suivantes :
- injection dans un moule ou ajout dans une filière d'extrudeuse de la composition élastomérique de pré-expansion telle que définie ci-avant, puis
- chauffage de la composition à une température supérieure à la température d'expansion des particules polymériques expansibles à la chaleur, de préférence supérieure à 160°C.

L'invention a aussi pour objet une composition thermoplastique élastomérique expansée non réticulée susceptible d'être obtenue par le procédé ci-dessus.

Enfin, l'invention a aussi pour objet une lèvre d'étanchéité utilisable dans divers domaines nécessitant des propriétés d'étanchéité tels que l'industrie du transport, le bâtiment, l'électroménager ou encore le packaging.

D'autres objets, caractéristiques, aspects et avantages de l'invention apparaîtront encore plus clairement à la lecture de la description et des exemples qui suivent.

Dans la présente invention, sauf indication expresse différente, tous les pourcentages (%) indiqués sont des % en poids.

Par composition thermoplastique élastomérique, on entend une composition qui se ramollit sous l'action de la chaleur, se durcit en se refroidissant et présente à basse température et notamment à température ambiante une aptitude à reprendre plus ou moins rapidement une forme originelle et des dimensions primitives après application d'une déformation sous contrainte.

La composition élastomérique selon l'invention est thermoplastique au-delà de la température ambiante, c'est-à-dire qu'elle présente une aptitude à être mise en forme par les procédés utilisés traditionnellement en plasturgie ou en confiserie, tels que l'extrusion, l'injection, le moulage, le soufflage, le calandrage et le laminage.

Par composition thermoplastique élastomérique de pré-expansion, on entend une composition élastomérique qui n'est pas encore expansée mais qui comprend, en son sein, néanmoins des agents d'expansion non encore activés (c'est à dire non expansés). Cette composition est généralement utilisée et vendue sous forme de granulés de diverses tailles. La composition thermoplastique élastomérique de pré-expansion est généralement utilisée dans un but d'extrusion ou d'injection.

Cette composition thermoplastique est destinée à être chauffée pour être fondue et transformée, sous l'effet de la chaleur, en un produit expansé final.

Comme indiqué précédemment, la composition thermoplastique élastomérique de pré-expansion comprend au moins 10 % en poids par rapport au poids total de la composition, d'un ou plusieurs élastomères multiblocs comportant au moins un bloc mou et au moins un bloc dur.

Par bloc « mou » (ou également « souple » ou « élastomère »), on entend un bloc qui présente une température de transition vitreuse (Tg) inférieure à la température ambiante (25°C), de préférence inférieure ou égale à 10°C, et plus préférentiellement inférieure à 0°C.

Par bloc « dur » (ou également « rigide » ou « thermoplastique »), on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

Typiquement, chacun de ces segments ou blocs (durs ou mous) contient au minimum plus de 5, généralement plus de 10 unités de base (motifs polymériques).

Dans la présente demande, lorsqu'il est fait référence à la température de transition vitreuse d'un élastomère, il s'agit de la température de transition vitreuse relative au bloc mou (ou bloc élastomère) (sauf indication contraire). En effet, de manière connue, les élastomères multiblocs comportant au moins un bloc mou et au moins un bloc dur présentent deux pics de température de transition vitreuse (Tg, mesurée selon ASTM D3418), la température la plus basse étant relative à la partie molle de l'élastomère, et la température la plus haute étant relative à la partie dure de l'élastomère.

Ainsi, le ou les élastomères utilisables selon l'invention présentent préférentiellement une température de transition vitreuse (donc une température de transition vitreuse du bloc mou) qui est inférieure ou égale à 25°C, plus préférentiellement inférieure ou égale à 10°C.

De manière préférentielle également, la température de transition vitreuse des élastomères utilisables selon l'invention est supérieure à -130°C.

Ces élastomères présentent, dans leur gamme, divers poids moléculaires partant de bas poids moléculaires à de hauts poids moléculaires.

Les élastomères utilisables selon l'invention sont de préférence des copolymères avec un petit nombre de blocs (moins de 5, typiquement 2 ou 3).

De préférence, le ou les élastomères sont choisis parmi les élastomères triblocs bloc dur/bloc mou/bloc dur et les élastomères diblocs bloc dur/bloc mou, et plus préférentiellement sont choisis parmi les élastomères triblocs bloc dur/bloc mou/bloc dur.

Le ou les blocs mous du ou des élastomères utilisables selon l'invention peuvent être des blocs mous insaturés.

Par bloc mou insaturé, on entend que ce bloc est issu au moins en partie de monomères diènes conjugués.

Les blocs mous insaturés utilisables selon l'invention sont de préférence choisis parmi tout homopolymère d'un monomère présentant des diènes conjugués et tout copolymère d'un monomère présentant des diènes conjugués avec un autre monomère.

En particulier, les blocs mous insaturés utilisables selon l'invention peuvent être choisis parmi :
a) tout homopolymère obtenu par polymérisation d'un monomère diène conjugué ayant de 4 à 12 atomes de carbone ;
b) tout copolymère obtenu par copolymérisation d'un ou plusieurs diènes conjugués entre eux ou avec un ou plusieurs composés vinyle aromatique ayant de 8 à 20 atomes de carbone ;
c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
d) un copolymère d'isobutène et d'isoprène (caoutchouc diénique butyl), ainsi que les versions halogénées, en particulier chlorées ou bromées, de ce type de copolymère.

A titre de diènes conjugués conviennent notamment l'isoprène, le butadiène-1,3, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués ; de préférence, ces diènes conjugués sont choisis parmi l'isoprène, le butadiène et un mélange contenant de l'isoprène et/ou du butadiène.

A noter que peuvent être greffées, sur ce bloc mou insaturé, des fonctionnalités réactives telles que de l'anhydride maléique, du glycidyl méthacrylate ou d'autres fonctionnalités ayant pour but une compatibilisation ou une réactivité chimique.

De manière particulièrement préférée dans l'invention, le ou les blocs mous sont choisis dans le groupe constitué par les polyisoprènes, les polybutadiènes, les copolymères de butadiène et isoprène, les copolymères de styrène et de butadiène, les copolymères d'éthylène et de butadiène, et les mélanges de ces polymères, ces polymères étant non hydrogénés ou partiellement hydrogénés.

Le ou les blocs mous du ou des élastomères utilisables selon l'invention peuvent aussi être des blocs mous saturés.

D'une manière générale, ces blocs mous saturés sont obtenus par hydrogénation de blocs mous insaturés, ou par simple copolymérisation.

Comme expliqué précédemment, le ou les élastomères utilisables selon l'invention comprennent également au moins un bloc dur.

Le ou les blocs durs peuvent être constitués à partir de monomères polymérisés de diverses natures.

En particulier, le ou les blocs durs peuvent être choisis dans le groupe constitué par les polyoléfines (polyéthylène, polypropylène), les polyuréthanes, les polyamides, les polyesters, les polyacétals, les polyéthers (polyoxyde d'éthylène, polyphénylène éther), les polysulfures de phénylène, les polyfluorés tels que le fluor-éthylène-propylène (FEP), le perfluoroalcoxy (PFA), et l'éthylène tétrafluoroéthylène (ETFE), les polystyrènes, les polycarbonates, les polysulfones, le polyméthylméthacrylate, le polyétherimide, les copolymères thermoplastiques tels que le copolymère acrylonitrile-butadiène-styrène (ABS), et les mélanges de ces polymères.

Concernant les polystyrènes, ceux-ci sont obtenus à partir de monomères styréniques.

Par monomère styrénique doit être entendu dans la présente description tout monomère comprenant du styrène, non substitué comme substitué. Parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

A l'image de ce qui peut être fait pour les blocs mous, des monomères réactifs, ou fonctionnalités peuvent toujours être inclus, de manière minoritaire, dans la chaîne polymérique du bloc dur.

On peut citer à titre d'élastomères utilisables selon l'invention les copolymères multiblocs d'éthylène et d'alpha-oléfines où l'alpha-oléfine est choisie parmi le propylène, le 1-butène, le 1-hexène, le 1-octène, le 4-méthyl-1-pentène, le norbornène, le 1-décène, le 1,5-hexadiène, l'éthylène ou une combinaison de tels composés.

Ces copolymères multiblocs d'éthylène et d'alpha-oléfines peuvent comprendre un ou plusieurs segments durs comportant au moins 98 % en poids d'éthylène, et un ou plusieurs segments mous comportant moins de 95 % en poids, de préférence moins de 50 % en poids d'éthylène. Préférentiellement les segments durs sont présents en une quantité de 5 à 85 % en poids.

A titre d'exemple, ces copolymères multiblocs d'éthylène et d'alpha-oléfines peuvent être fournis par l'entreprise DOW sous la gamme Engage et Infuse.

Le ou les élastomères utilisables selon l'invention sont préférentiellement choisis parmi les polymères styrène/butadiène/styrène (SBS), les polymères styrène/isoprène/styrène (SIS), les polymères styrène/éthylène-butylène/styrène (SEBS), les polymères styrène/éthylène/propylène/styrène (SEPS), les polymères styrène/éthylène/éthylène-propylène/styrène (SEEPS), les polymères styrène/éthylène-butylène/styrène comprenant des motifs différents des motifs issus de l'éthylène et du butylène dans le bloc éthylène-butylène (SOESS de la société Ashahi), les polymères styrène/éthylène-butylène/styrène comprenant des motifs fonctionnalisés permettant une réticulation dans le ou les blocs styrène (Septon V de la société Kuraray), les copolymères multiblocs d'éthylène et d'alpha-oléfines et les mélanges de ces polymères, et de préférence parmi les polymères styrène/éthylène-butylène/styrène.

De manière préférée, le ou les élastomères utilisables selon l'invention sont choisis parmi les élastomères comprenant un bloc mou saturé, en particulier l'élastomère utilisable selon l'invention est le polymère styrène/éthylène-butylène/styrène (SEBS).

On peut notamment citer à titre d'élastomère utilisable selon l'invention, le polymère styrène/éthylène-butylène/styrène (SEBS) comprenant 31 à 34 % en poids de motifs styrène par rapport au poids total du polymère vendu sous la dénomination « TAIPOL 6151 » par TSRC.

Comme indiqué précédemment, le ou les élastomères représentent 15 à 37 % en poids, par rapport au poids total de la composition élastomérique.

De préférence, le ou les élastomères représentent de 15 à 35% en poids, par rapport au poids total de la composition élastomérique.

Comme indiqué précédemment, la composition élastomérique de pré-expansion selon l'invention comprend des particules polymériques expansibles à la chaleur encapsulant un fluide expansible à la chaleur.

Par particules polymériques expansibles à la chaleur, on entend des particules polymériques sous forme de microsphères de polymères constituant l'enveloppe de la particule encapsulant un gaz ou un liquide avec un diamètre généralement d'environ 10 µm.

Ces particules ont la particularité, lorsqu'elles sont chauffées, d'avoir une pression interne qui augmente due à la présence du gaz chauffé ou du liquide en ébullition. Ainsi, la taille et le volume des particules thermoplastiques sont augmentés jusqu'à atteindre une taille maximale de plusieurs dizaines de µm.

Ces particules ont l'avantage de permettre l'obtention d'une composition thermoplastique élastomérique expansée où la porosité de la composition est formée grâce à ces particules.

Les polymères constituant l'enveloppe des particules sont généralement choisis parmi les polymères ou copolymères de polyoléfines tels que le polyéthylène et le polystyrène, de polyamides, de polyesters, les polymères urée-formaldéhyde, les polymères d'acrylonitrile, les copolymères d'acrylonitrile et de chlorure de vinylidène, et les mélanges de ces polymères, et de préférence sont choisis parmi les polymères d'acrylonitrile, les copolymères d'acrylonitrile et de chlorure de vinylidène, et les mélanges de ces composés.

De préférence, les particules polymériques expansibles à la chaleur utilisables selon l'invention sont choisies parmi les particules expansibles à partir de 140°C, de préférence à partir de 160°C.

Le fluide encapsulé dans les particules est un gaz ou un liquide, de préférence un gaz tel qu'un hydrocarbure comme l'isobutane, le pentane, l'isopentane, le triméthylpentane ou encore un halogénoalcane.

De manière particulièrement préférée, les particules polymériques expansibles à la chaleur utilisables selon l'invention sont choisies parmi les particules d'acrylonitrile renfermant un hydrocarbure tel que l'isobutane, l'isopentane et les halogénoalcanes.

De telles particules polymériques expansibles à la chaleur sont notamment vendues sous le nom commercial « Expancel » par la société Akzonobel.

On peut également citer les particules polymériques vendues sous le nom commercial « Advancel » par la société Sekisui.

La composition thermoplastique élastomérique de pré-expansion selon l'invention comprend de 0,5 à 2 %, par rapport au poids total de la composition, d'une ou plusieurs particules polymériques expansibles à la chaleur.

Le dosage en particules polymériques expansibles à la chaleur dépend de la densité finale souhaitée de la matière expansée.

De manière avantageuse, la composition thermoplastique élastomérique de pré-expansion peut comprendre en outre un ou plusieurs polymères thermoplastiques polyoléfines.

De préférence, le ou les polymères thermoplastiques polyoléfines sont choisis parmi les homopolymères et copolymères de polyéthylène, de polypropylène, les polyoléfines fonctionnalisées telles que le polypropylène-anhydride maléique, et les mélanges de ces polymères.

Dans un mode préféré de l'invention, la composition thermoplastique élastomérique de pré-expansion comprend, en outre du ou des élastomères et des particules polymériques expansibles à la chaleur, un homopolymère et/ou copolymère de polypropylène, et avantageusement également un homopolymère et/ou copolymère de polyéthylène.

La composition thermoplastique élastomérique de pré-expansion selon l'invention comprend avantageusement de 5 à 40 % en poids, de préférence de 10 à 35 % en poids, par rapport au poids total de la composition, d'un ou plusieurs polymères thermoplastiques polyoléfines.

De manière avantageuse, la composition élastomérique de pré-expansion peut également comprendre un ou plusieurs agents plastifiants, tels qu'une huile (ou huile plastifiante), ou encore un polymère plastifiant bien connu de l'homme de métier tel qu'un polybutadiène ou un polyisobutène.

On peut utiliser toute huile, de préférence à caractère faiblement polaire, apte à étendre, plastifier des élastomères, notamment thermoplastiques. A température ambiante (25°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier.

Par exemple, l'huile d'extension est choisie dans le groupe constitué par les huiles paraffiniques.

Ainsi, dans un mode particulier de la présente invention, la composition thermoplastique élastomérique de pré-expansion comprend une ou plusieurs huiles plastifiantes, de préférence une ou plusieurs huiles d'hydrocarbures, et plus préférentiellement une ou plusieurs huiles paraffiniques.

La composition thermoplastique élastomérique de pré-expansion comprend préférentiellement de 15 à 50 % en poids, plus préférentiellement de 20 à 40 % en poids par rapport au poids total de la composition, d'un ou plusieurs agents plastifiants.

La composition thermoplastique élastomérique de pré-expansion selon l'invention peut comprendre des charges telles que du carbonate de calcium, du talc, des argiles, des silices, du noir de carbone, du dioxyde de titane, des déchets minéraux comme par exemple des coquilles d'huître recyclée ou des déchets industriels comme par exemple du caoutchouc recyclé.

L'homme du métier pourra également ajouter tout type de charges connues en tant que telles et non-listées ci-dessus.

La composition thermoplastique élastomérique de pré-expansion selon l'invention peut également comprendre divers additifs usuellement présents dans les compositions thermoplastiques élastomériques, en particulier les agents de protection tels que les antioxydants, les antiozonants, et les anti-UV et les divers agents de mise en œuvre ou autres stabilisants.

La composition thermoplastique élastomérique de pré-expansion selon l'invention ne comprend aucunement d'agent de réticulation comme par exemple de la résine phénolique, des peroxydes ou autres agents de réticulation connus de l'homme du métier.

Dans un mode tout particulièrement préféré de l'invention, la composition thermoplastique élastomérique de pré-expansion comprend :
- de 15 à 37% en poids, mieux de 15 à 35% en poids, d'un ou plusieurs élastomères choisis parmi les polymères styrène/butadiène/styrène (SBS), les polymères styrène/isoprène/styrène (SIS), les polymères styrène/éthylène-butylène/styrène (SEBS), les polymères styrène/éthylène/propylène/styrène (SEPS), les polymères styrène/éthylène/éthylène-propylène/styrène (SEEPS), les polymères styrène/éthylène-butylène/styrène comprenant des motifs différents des motifs issus de l'éthylène et du butylène dans le bloc éthylène-butylène (SOESS), les polymères styrène/éthylène-butylène/styrène comprenant des motifs fonctionnalisés permettant une réticulation dans le ou les blocs styrène (Septon V), les copolymères multiblocs d'éthylène et d'alpha-oléfines et les mélanges de ces polymères, et de préférence parmi les polymères styrène/éthylène-butylène/styrène (SEBS),
- de 15 à 50 % en poids, de préférence de 20 à 40 % en poids d'une ou plusieurs huiles paraffiniques,
- de 5 à 40 % en poids, de préférence de 10 à 35 % en poids d'un ou plusieurs polymères thermoplastiques polyoléfines, de préférence choisis parmi les homopolymères et/ou copolymères de polyéthylène, de polypropylène, et les mélanges de ces polymères,
- de 0,5 à 2 % en poids de particules polymériques expansibles à la chaleur encapsulant un fluide expansible à la chaleur,

les teneurs étant données par rapport au poids total de la composition.

La composition thermoplastique élastomérique de pré-expansion selon l'invention est généralement préparée par mélange des constituants et chauffage à une température inférieure à la température d'expansion des particules polymériques expansibles à la chaleur, de préférence inférieure à 160°C.

La composition thermoplastique élastomérique de pré-expansion selon l'invention est généralement disponible sous la forme de billes ou de granulés.

Un autre objet de la présente invention est un procédé de préparation d'une composition thermoplastique élastomérique expansée comprenant les étapes suivantes :
- injection dans un moule ou ajout dans une filière d'extrudeuse de la composition élastomérique de pré-expansion telle que définie ci-avant, puis
- chauffage de la composition à une température supérieure à la température d'expansion des particules polymériques expansibles à la chaleur, de préférence supérieure à 160°C.

De préférence, l'étape de chauffage de la composition élastomérique de pré-expansion a lieu à une température supérieure à 180°C, plus préférentiellement à une température supérieure à 190°C.

Un autre objet de la présente invention est une composition thermoplastique élastomérique expansée non réticulée susceptible d'être obtenue par le procédé ci-dessus.

De préférence, la composition thermoplastique élastomérique expansée est obtenue par le procédé selon l'invention.

La composition thermoplastique élastomérique expansée selon l'invention comprend :
- de 15 à 37 % en poids par rapport au poids total de la composition, d'un ou plusieurs élastomères multiblocs comportant au moins un bloc mou et au moins un bloc dur,
- de 0.5 à 2 % en poids par rapport au poids total de la composition de particules polymériques expansées, la composition élastomérique expansée n'étant pas réticulée.

La composition thermoplastique élastomérique expansée selon l'invention peut comprendre une ou plusieurs des caractéristiques de la composition thermoplastique élastomérique de pré-expansion telle que définie ci-avant.

La composition thermoplastique élastomérique expansée selon l'invention présente généralement une densité inférieure à 1, de préférence inférieure à 0,85.

La composition thermoplastique élastomérique expansée selon l'invention présente une déformation rémanente à la compression inférieure à 65 %, de préférence inférieure à 55 % selon la norme ISO 815, méthode A, plot B, 22h à 70°C.

Enfin, un objet de la présente invention est une lèvre d'étanchéité utilisable dans divers domaines nécessitant des propriétés d'étanchéité tels que l'industrie du transport, le bâtiment, l'électroménager ou encore le packaging.

De préférence, la lèvre d'étanchéité selon l'invention est utilisée dans les domaines de l'industrie du transport et dans le bâtiment, et plus particulièrement utilisée dans le domaine des lèvres d'étanchéité pour l'industrie du transport.

La lèvre d'étanchéité selon l'invention est par exemple destinée à être utilisée dans tout véhicule de préférence dans des véhicules à moteur de type tourisme, SUV (« Sport Utility Vehicles »), deux roues (notamment motos), avions, bateaux ainsi que des véhicules industriels tels que des camionnettes, des poids-lourds et autres véhicules de transport ou de manutention.

L'invention ainsi que ses avantages seront compris de manière plus approfondie à la lumière de l'exemple de réalisation qui suit.

### EXEMPLE

Compositions selon l'invention

Les teneurs sont indiquées en % en poids.

| **Composition** | **A1** | **A2** |
|---|---|---|
| Copolymère à blocs SEBS linéaire comprenant 32 % en poids de motifs styrène⁽¹⁾ | 34 | 18 |
| Huile paraffinique | 34 | 28 |
| Polypropylène⁽²⁾ | 20 | 4 |
| Polyéthylène moyenne densité (IFC = 0,1, d = 0,939) | 7 | 8,5 |
| Carbonate de calcium (5 µm) | 3,65 | 35,15 |
| Phosphite | 0,35 | 0,35 |
| Microsphères polymériques expansibles à la chaleur⁽³⁾ | 1 | 1 |
| Polyphénylène éther⁽⁴⁾ | - | 5 |

| | | |
|---|---|---|
| (1) TAIPOL 6151 (2) PP050G2M (3) Expancel 980DU120 (4) PX-100F IFC : indice de fluidité à chaud | | |

La composition élastomérique A1 selon l'invention est comparée à une composition commerciale B1 utilisée pour l'étanchéité des vitres de véhicules automobiles. Les compositions A1 et B1 présentent une dureté équivalente.

| **Caractéristiques et normes** | | **B1 (Comp.)** | **A1 (Inv.)** |
|---|---|---|---|
| Dureté (en Shore A) | ISO868 (15 s) | 68 | 67 |
| Densité relative | lSO1183 | 1,13 | 0,69 |
| Contrainte à une déformation de 100 % (en MPa) | ISO37 23°C - H1 - 500 mm/min | 2,3 | 2,2 |
| Résistance à la rupture (en MPa) | ISO37 23°C - H1 - 500 mm/min | 6,1 | 4,7 |
| Allongement à la rupture (en %) | ISO37 23°C - H1 - 500 mm/min | 470 | 540 |
| Déformation rémanente après compression (en %) | ISO815-1, A 22 h, 70°C | 48 | 53 |
| Test d'embuage (« fogging test ») (en mg) | DIN 75201-B, 100°C | 5,9 | 1,6 |

A dureté équivalente, la composition A1 selon l'invention présente une densité relative plus faible que la composition comparative B1 ce qui traduit l'expansion de la composition A1 selon l'invention.

Cependant, malgré une densité plus faible et une dureté équivalente, la composition A1 selon l'invention présente des propriétés élastomériques similaires à la composition B1, en particulier concernant la déformation rémanente à la compression, qui reste faible et conforme aux exigences requises dans le domaine automobile.

De plus, les tests d'embuage montrent que la composition A1 selon l'invention présente une émission bien moindre de composés organiques volatils que la composition comparative B1.

La composition élastomérique A2 selon l'invention est comparée à une composition commerciale classique B2 utilisée pour l'étanchéité des vitres de véhicules automobiles. Les compositions A2 et B2 présentent une dureté identique.

| **Caractéristiques et normes** | | **B2 (Comp.)** | **A2 (Inv.)** |
|---|---|---|---|
| Dureté (en Shore A) | ISO868 (15 s) | 45 | 45 |
| Densité relative | lSO1183 | 1 | 0,75 |
| Contrainte à une déformation de 100 % (en MPa) | ISO37 23°C - H1 - 500 mm/min | 1,2 | 1,5 |
| Résistance à la rupture (en MPa) | ISO37 23°C - H1 - 500 mm/min | 3,3 | 2,9 |
| Allongement à la rupture (en %) | ISO37 23°C - H1 - 500 mm/min | 650 | 351 |
| Déformation rémanente après compression (en %) | ISO815-1, A 22 h, 70°C | 43 | 47 |
| Test d'embuage (« fogging test ») (en mg) | DIN 75201-B, 100°C | 2,9 | 1,2 |

A dureté identique, la composition A2 selon l'invention présente une densité relative plus faible que la composition B2 comparative ce qui traduit l'expansion de la composition A2 selon l'invention.

Cependant, malgré une densité plus faible et une dureté identique, la composition A2 selon l'invention présente des propriétés élastomériques similaires à la composition B2, en particulier concernant la déformation rémanente à la compression, qui reste faible et conforme aux exigences requises dans le domaine automobile.

De plus, les tests d'embuage montrent que la composition A2 selon l'invention présente une émission bien moindre de composés organiques volatils que la composition comparative B2.

## Revendications

1. Composition thermoplastique élastomérique de pré-expansion, non réticulée, comprenant :
- de 15 à 37% en poids par rapport au poids total de la composition, d'un ou plusieurs élastomères multiblocs comportant au moins un bloc mou présentant une température de transition vitreuse inférieure à 25°C et au moins un bloc dur présentant une température de transition vitreuse, ou une température de fusion dans le cas d'un polymère semi-crystallin, supérieure à égale à 80°C,
- des particules polymériques expansibles à la chaleur encapsulant un fluide expansible à la chaleur, étant présentes en une teneur de 0,5 à 2 % en poids par rapport au poids total de la composition.

2. Composition thermoplastique élastomérique selon la revendication 1, **caractérisée en ce que** le ou les élastomères sont choisis parmi les élastomères diblocs bloc dur/bloc mou, les élastomères triblocs bloc dur/bloc mou/bloc dur, et de préférence parmi les élastomères triblocs bloc dur/bloc mou/bloc dur.

3. Composition thermoplastique élastomérique selon la revendication 1 ou 2, **caractérisée en ce que** le ou les élastomères sont choisis parmi les polymères styrène/butadiène/styrène (SBS), les polymères styrène/isoprène/styrène (SIS), les polymères styrène/éthylène-butylène/styrène (SEBS), les polymères styrène/éthylène/propylène/styrène (SEPS), les polymères styrène/éthylène/éthylène-propylène/styrène (SEEPS), les polymères styrène/éthylène-butylène/styrène comprenant des motifs différents des motifs issus de l'éthylène et du butylène dans le bloc éthylène-butylène (SOESS), les polymères styrène/éthylène-butylène/styrène comprenant des motifs fonctionnalisés permettant une réticulation dans le ou les blocs styrène , les copolymères multiblocs d'éthylène et d'alpha-oléfines et les mélanges de ces polymères, et de préférence parmi les polymères styrène/éthylène-butylène/styrène (SEBS).

4. Composition thermoplastique élastomérique selon l'une quelconque des revendications précédentes, **caractérisée en ce que** le ou les élastomères représentent de 15 à 35% en poids par rapport au poids total de la composition élastomérique.

5. Composition thermoplastique élastomérique selon l'une quelconque des revendications précédentes, **caractérisée en ce que** les particules polymériques expansibles à la chaleur sont choisies parmi les particules expansibles à partir de 140°C, de préférence à partir de 160°C.

6. Composition thermoplastique élastomérique selon l'une quelconque des revendications précédentes, **caractérisée en ce que** les particules polymériques expansibles à la chaleur sont choisies parmi les particules d'acrylonitrile renfermant un hydrocarbure tel que l'isobutane, l'isopentane et les halogénoalcanes.

7. Composition thermoplastique élastomérique selon l'une quelconque des revendications précédentes, **caractérisée en ce qu'**elle comprend en outre un ou plusieurs polymères thermoplastiques polyoléfines, de préférence choisis parmi les homopolymères et copolymères de polyéthylène, de polypropylène, les polyoléfines fonctionnalisées, et les mélanges de ces polymères.

8. Composition thermoplastique élastomérique selon l'une quelconque des revendications précédentes, **caractérisée en ce qu'**elle comprend un homopolymère et/ou copolymère de polypropylène, et avantageusement également un homopolymère et/ou copolymère de polyéthylène.

9. Composition thermoplastique élastomérique selon l'une quelconque des revendications précédentes, **caractérisée en ce qu'**elle comprend un ou plusieurs agents plastifiants, de préférence une ou plusieurs huiles plastifiantes, plus préférentiellement une ou plusieurs huiles d'hydrocarbures, en particulier une ou plusieurs huiles paraffiniques.

10. Composition thermoplastique élastomérique selon l'une quelconque des revendications précédentes, **caractérisée en ce qu'**elle comprend :
- de 15 à 37% en poids, mieux de 15 à 35% en poids, d'un ou plusieurs élastomères choisis parmi les polymères styrène/butadiène/styrène (SBS), les polymères styrène/isoprène/styrène (SIS), les polymères styrène/éthylène-butylène/styrène (SEBS), les polymères styrène/éthylène/propylène/styrène (SEPS), les polymères styrène/éthylène/éthylène-propylène/styrène (SEEPS), les polymères styrène/éthylène-butylène/styrène comprenant des motifs différents des motifs issus de l'éthylène et du butylène dans le bloc éthylène-butylène (SOESS), les polymères styrène/éthylène-butylène/styrène comprenant des motifs fonctionnalisés permettant une réticulation dans le ou les blocs styrène, les copolymères multiblocs d'éthylène et d'alpha-oléfines et les mélanges de ces polymères, et de préférence parmi les polymères styrène/éthylène-butylène/styrène (SEBS),
- de 15 à 50 % en poids, de préférence de 20 à 40 % en poids d'une ou plusieurs huiles paraffiniques,
- de 5 à 40 % en poids, de préférence de 10 à 35 % en poids d'un ou plusieurs polymères thermoplastiques polyoléfines, de préférence choisis parmi les homopolymères et/ou copolymères de polyéthylène, de polypropylène, et les mélanges de ces polymères,
- de 0,5 à 2 % en poids de particules polymériques expansibles à la chaleur encapsulant un fluide expansible à la chaleur,
les teneurs étant données par rapport au poids total de la composition.

11. Procédé de préparation d'une composition thermoplastique élastomérique expansée comprenant les étapes suivantes :
- injection dans un moule ou ajout dans une filière d'extrudeuse de la composition thermoplastique élastomérique de pré-expansion selon l'une quelconque des revendications précédentes, puis
- chauffage de la composition thermoplastique élastomérique de pré-expansion à une température supérieure à la température d'expansion des particules polymériques expansibles à la chaleur, de préférence supérieure à 160°C.

12. Composition thermoplastique élastomérique expansée non réticulée susceptible d'être obtenue par le procédé selon la revendication 11.

13. Lèvre d'étanchéité utilisée dans les domaines de l'industrie du transport et dans le bâtiment, comprenant la composition thermoplastique élastomérique expansée selon la revendication 12.

## Patentansprüche

1. Thermoplastische, nicht vernetzte, elastomere Präexpansionszusammensetzung, Folgendes umfassend:
- 15 bis 37 Gew.-% in Bezug auf das gesamte Gewicht der Zusammensetzung eines oder mehrerer Mehrblockelastomere, umfassend wenigstens einen weichen Block, eine Glastransitionstemperatur von weniger als 25 °C aufweisend, und wenigstens einen harten Block, eine Glastransitionstemperatur oder eine Fusionstemperatur im Fall eines semikristallinen Polymers von mehr als bis gleich 80 °C aufweisend,
- wärmeexpandierbare Polymerpartikel, ein wärmeexpandierbares Fluid einkapselnd, vorhanden in einem Gehalt von 0,5 bis 2 Gew.-% im Verhältnis zum Gesamtgewicht der Zusammensetzung.

2. Thermoplastische elastomere Zusammensetzung nach Anspruch 1, **dadurch gekennzeichnet, dass** das oder die Elastomere ausgewählt sind aus Zweiblockelastomeren mit hartem Block/weichem Block, Dreiblockelastomeren mit hartem Block/weichem Block/hartem Block, und bevorzugt aus Dreiblockelastomeren mit hartem Block/weichem Block/hartem Block.

3. Thermoplastische elastomere Zusammensetzung nach Anspruch 1 oder 2, **dadurch gekennzeichnet, dass** das oder die Elastomere ausgewählt sind aus Polymeren von Styrol / Butadien / Styrol (SBS), Polymeren von Styrol / Isopren / Styrol (SIS), Polymeren von Styrol / Ethylen-Butylen / Styrol (SEBS), Polymeren von Styrol / Ethylen / Ethylen-Propylen / Styrol (SEPS), Polymeren von Styrol / Ethylen / Propylen / Styrol (SEPS), Styrol / Ethylen / Ethylen-Propylen / Styrol (SEEPS), Polymeren von Styrol / Ethylen-Butylen / Styrol, Einheiten enthaltend, die sich von den Einheiten aus Ethylen und Butylen im Ethylen-Butylen-Block unterscheiden (SOESS), Polymeren von Styrol / Ethylen-Butylen / Styrol, umfassend funktionalisierte Einheiten, eine Vernetzung in dem oder den Styrolblocks, Multiblock-Copolymeren von Ethylen und Alpha-Olefinen ermöglichend, und den Mischungen dieser Polymere, und bevorzugt aus Polymeren von Styrol / Ethylen-Butylen / Styrol (SEBS).

4. Thermoplastische elastomere Zusammensetzung nach einem der vorhergehenden Ansprüche, **dadurch gekennzeichnet, dass** das oder die Elastomere 15 bis 35 Gew.-% des Gesamtgewichts der elastomeren Zusammensetzung ausmachen.

5. Thermoplastische elastomere Zusammensetzung nach einem der vorhergehenden Ansprüche, **dadurch gekennzeichnet, dass** die wärmeexpandierbaren Polymer-Partikel aus Partikeln ausgewählt sind, die ab 140 °C, bevorzugt ab 160 °C, expandierbar sind.

6. Thermoplastische elastomere Zusammensetzung nach einem der vorhergehenden Ansprüche, **dadurch gekennzeichnet, dass** die wärmeexpandierbaren Polymer-Partikel aus Acrylonitril-Partikeln ausgewählt sind, einen Kohlenwasserstoff wie Isobutan, Isopentan und Halogenalkane enthaltend.

7. Thermoplastische elastomere Zusammensetzung nach einem der vorhergehenden Ansprüche, **dadurch gekennzeichnet, dass** sie weiter ein oder mehrere thermoplastische Polyolefinpolymere umfasst, bevorzugt ausgewählt aus Homopolymeren und Copolymeren von Polyethylen, Polypropylen, funktionalisierten Polyolefinen und den Mischungen dieser Polymere.

8. Thermoplastische elastomere Zusammensetzung nach einem der vorhergehenden Ansprüche, **dadurch gekennzeichnet, dass** sie ein Homopolymer und / oder ein Copolymer von Polypropylen umfasst, und vorteilhafterweise ebenfalls ein Homopolymer und / oder ein Copolymer von Polyethylen.

9. Thermoplastische elastomere Zusammensetzung nach einem der vorhergehenden Ansprüche, **dadurch gekennzeichnet, dass** sie weiter einen oder mehrere Weichmacher umfasst, bevorzugt ein oder mehrere Weichmacheröle, bevorzugter ein oder mehrere Kohlenwasserstofföle, insbesondere ein oder mehrere Paraffinöle.

10. Thermoplastische elastomere Zusammensetzung nach einem der vorhergehenden Ansprüche, **dadurch gekennzeichnet, dass** sie Folgendes umfasst:
- 15 bis 37 Gew.-%, besser 15 bis 35 Gew.-%, eines oder mehrerer Elastomere, ausgewählt aus Polymeren von Styrol / Butadien / Styrol (SBS), Polymeren von Styrol / Isopren / Styrol (SIS), Polymeren von Styrol / Ethylen / Butylen / Styrol (SEBS), Polymeren von Styrol / Ethylen / Propylen / Styrol (SEPS), Polymeren von Styrol / Ethylen / Ethylen-Propylen / Styrol (SEEPS), Polymeren von Styrol / Ethylen-Butylen / Styrol, Einheiten enthaltend, die sich von den Einheiten aus Ethylen und Butylen im Ethylen-Butylen-Block unterscheiden (SOESS), Polymeren von Styrol / Ethylen-Butylen / Styrol, umfassend funktionalisierte Einheiten, eine Vernetzung in dem oder den Styrenblocks ermöglichend, Multiblock-Copolymeren von Ethylen und Alpha-Olefinen und Mischungen dieser Polymere, und bevorzugt aus Polymeren von Styrol / Ethylen-Butylen / Styrol (SEBS),
- 15 bis 50 Gew.-%, bevorzugt 20 bis 40 Gew.-%, eines oder mehrerer Paraffinöle,
- 5 bis 40 Gew.-%, bevorzugt 10 bis 35 Gew.-%, eines oder mehrerer thermoplastischer Polymeren von Polyolefinen, bevorzugt ausgewählt aus Homopolymeren und / oder Copolymeren von Polyethylen, Polypropylen und den Mischungen dieser Polymere,
- 0,5 bis 2 Gew.-% wärmeexpandierbare Polymerpartikel, ein wärmeexpandierbares Fluid einkapselnd,
wobei die Gehalte im Verhältnis zum Gesamtgewicht der Zusammensetzung angegeben sind.

11. Verfahren zum Herstellen einer expandierten thermoplastischen elastomeren Zusammensetzung, umfassend die folgenden Schritte:
- Einspritzen in eine Form oder Hinzufügen in eine Extruderdüse der thermoplastischen elastomeren Präexpansionszusammensetzung nach einem der vorhergehenden Ansprüche, dann
- Erhitzen der thermoplastischen elastomeren Präexpansionszusammensetzung auf eine Temperatur höher als die Expansionstemperatur der wärmeexpandierbaren Polymerpartikel, bevorzugt höher als 160 °C.

12. Thermoplastische, expandierte, nicht vernetzte elastomere Zusammensetzung, erhältlich durch das Verfahren nach Anspruch 11.

13. Dichtlippe, verwendet in den Bereichen des Transport-und Bauwesens, umfassend die expandierte thermoplastische elastomere Zusammensetzung nach Anspruch 12.

## Claims

1. Pre-expansion thermoplastic elastomer composition, non-crosslinked, comprising:
- from 15 to 37% by weight, with respect to the total weight of the composition, one or more multiblock elastomers including at least one soft block having a glass transition temperature below 25°C and at least one hard block having a glass transition temperature, or a melting point in the case of a semicrystalline polymer, above or equal to 80°C,
- heat-expandable polymer particles encapsulating a heat-expandable fluid, being present in a proportion of 0.5 to 2% by weight with respect to the total weight of the composition.

2. Thermoplastic elastomer composition according to claim 1, **characterised in that** the elastomer or elastomers are selected from hard-block/soft-block diblock elastomers, hard-block/soft-block/hard-block triblock elastomers, and preferably from hard-block/soft-block/hard-block triblock elastomers.

3. Thermoplastic elastomer composition according to claim 1 or 2, **characterised in that** the elastomer or elastomers are selected from styrene/butadiene/styrene (SBS) polymers, styrene/isoprene/styrene (SIS) polymers, styrene/ethylene-butylene/styrene (SEBS) polymers, styrene/ethylene/propylene/styrene (SEPS) polymers, styrene/ethylene/ethylene-propylene/styrene (SEEPS) polymers, the styrene/ethylene-butylene/styrene polymers comprising units different from the units coming from the ethylene and butylene in the ethylene-butylene (SOESS) block, the styrene/ethylene-butylene/styrene polymers comprising functionalised units allowing crosslinking in the styrene block or blocks, the ethylene and alpha-olefin multiblock copolymers and the mixtures of these polymers, and preferably from styrene/ethylene-butylene/styrene (SEBS) polymers.

4. Thermoplastic elastomer composition according to any one of the preceding claims, **characterised in that** the elastomer or elastomers represent from 15 to 35% by weight with respect to the total weight of the elastomer composition.

5. Thermoplastic elastomer composition according to any one of the preceding claims, **characterised in that** the heat-expandable polymer particles are selected from the particles that are expandable as from 140°C, preferably as from 160°C.

6. Thermoplastic elastomer composition according to any one of the preceding claims, **characterised in that** the heat-expandable polymer particles are selected from acrylonitrile particles containing a hydrocarbon such as isobutane or isopentane and haloalkanes.

7. Thermoplastic elastomer composition according to any one of the preceding claims, **characterised in that** it further comprises one or more polyolefin thermoplastic polymers, preferably selected from polyethylene and polypropylene homopolymers and copolymers, functionalised polyolefins, and mixtures of these polymers.

8. Thermoplastic elastomer composition according to any one of the preceding claims, **characterised in that** it comprises a polypropylene homopolymer and/or copolymer, and advantageously also a polyethylene homopolymer and/or copolymer.

9. Thermoplastic elastomer composition according to any one of the preceding claims, **characterised in that** it comprises one or more plasticisers, preferably one or more plasticising oils, more preferentially one or more hydrocarbon oils, in particular one or more paraffin oils.

10. Thermoplastic elastomer composition according to any one of the preceding claims, **characterised in that** it comprises:
- from 15 to 37% by weight, better from 15 to 35% by weight, one or more elastomers selected from styrene/butadiene/styrene (SBS) polymers, styrene/isoprene/styrene (SIS) polymers, styrene/ethylene-butylene/styrene (SEBS) polymers, styrene/ethylene/propylene/styrene (SEPS) polymers, styrene/ethylene/ethylene-propylene/styrene (SEEPS) polymers, the styrene/ethylene-butylene/styrene polymers comprising units different from the units coming from the ethylene and butylene in the ethylene-butylene (SOESS) block, the styrene/ethylene-butylene/styrene polymers comprising functionalised units allowing crosslinking in the styrene block or blocks, the ethylene and alpha-olefin multiblock copolymers and the mixtures of these polymers, and preferably from styrene/ethylene-butylene/styrene (SEBS) polymers,
- from 15 to 50% by weight, preferably from 20 to 40% by weight, one or more paraffin oils,
- from 5 to 40% by weight, preferably from 10 to 35% by weight, one or more polyolefin thermoplastic polymers, preferably selected from polyethylene and polypropylene homopolymers and/or copolymers, and the mixtures of these polymers,
- from 0.5 to 2% by weight heat-expandable polymer particles encapsulating a heat-expandable fluid,
the proportions being given with respect to the total weight of the composition.

11. Method for preparing an expanded thermoplastic elastomer composition, comprising the following steps:
- injecting into a mould or adding into an extruder die the pre-expansion thermoplastic elastomer composition according to any one of the preceding claims, then
- heating the pre-expansion thermoplastic elastomer composition to a temperature above the expansion temperature of the heat-expandable polymer particles, preferably above 160°C.

12. Non-crosslinked expanded thermoplastic elastomer composition obtainable by the method according to claim 11.

13. Sealing lip used in the fields of the transport industry and in construction, comprising the expanded thermoplastic elastomer composition according to claim 12.
